# EUROPÄISCHE PATENTSCHRIFT

(11) **EP 3 693 635 B1**
(45) Veröffentlichungstag und Bekanntmachung des Hinweises auf die Patenterteilung: **11.03.2026**
(21) Anmeldenummer: 20150962.7
(22) Anmeldetag: 09.01.2020
(51) Int. Cl.: F16H 57/04

(54) **ANTRIEBSSTRANG FÜR EIN FAHRZEUG, INSBESONDERE FÜR EIN KRAFTFAHRZEUG**
DRIVE TRAIN FOR A VEHICLE, IN PARTICULAR FOR A MOTOR VEHICLE
GROUPE MOTOPROPULSEUR POUR UN VÉHICULE, EN PARTICULIER POUR UN VÉHICULE AUTOMOBILE

(30) Priorität: 07.02.2019 DE 102019201585
(43) Veröffentlichungstag der Anmeldung: 12.08.2020
(73) Patentinhaber: VOLKSWAGEN AG, 38440 Wolfsburg (DE)
(72) Erfinder: Lamm, Eugen, 38448 Wolfsburg (DE); Becker, Björn, 38106 Braunschweig (DE)

(56) Entgegenhaltungen:
- JP-A- 2005 278 319
- JP-A- 2018 087 615
- US-A1- 2016 123 455
- US-A1- 2019 032 769

## Beschreibung

Die Erfindung betrifft einen Antriebsstrang für ein Fahrzeug, insbesondere für ein Kraftfahrzeug, gemäß der Merkmale des Oberbegriffes des Patentanspruches 1.

Im Stand der Technik sind eine Vielzahl von Antriebssträngen für Kraftfahrzeuge bekannt. Diese weisen zunächst eine Antriebswelle, ein Getriebe, ein Differential und mindestens eine Radantriebswelle auf. Hierbei läuft das Antriebsdrehmoment beziehungsweise der Kraftfluss von dem Antriebsmotor (dies kann eine Verbrennungskraftmaschine oder ein Elektromotor sein) über eine Antriebswelle, eventuell über eine Kupplung und über ein Getriebe zu mindestens einer Radantriebswelle. Bei einer Vielzahl von Antriebssträngen ist funktional zwischen dem Getriebe und der Radantriebswelle ein Differential funktional wirksam angeordnet. Hierbei weist das Differential im Allgemeinen ein Achsantriebszahnrad auf, das mit einem Zahnrad des Getriebes in Eingriff steht bzw. in Eingriff stehen kann.

In der US 9,278,618 B2 ist der Antriebsstrang für ein Fahrzeug, insbesondere für ein Kraftfahrzeug im Wesentlichen wie folgt ausgebildet: Ein Antriebsmotor, hier ein Elektromotor treibt eine Antriebswelle an. Auf der Antriebswelle sitzt ein erstes Ritzel, das mit einem auf einer Zwischenwelle angeordnetem ersten Zahnrad in Eingriff steht. Auf der Zwischenwelle ist ein zweites Ritzel angeordnet bzw. ausgebildet, das wiederum mit dem Achsantriebszahnrad eines Differentials in Eingriff steht. Der Kraftfluss wird daher von der Antriebswelle auf das Achsantriebszahnrad des Differentials mithilfe des vorhandenen Getriebes übertragen, wobei das hier vorgesehene Getriebe insbesondere als ein Stirnradgetriebe ausgebildet ist. Als Zahnräder des Getriebes sind zumindest das auf der Antriebswelle ausgebildete erste Ritzel, das auf der Zwischenwelle angeordnete Zahnrad und das auf der Zwischenwelle angeordnete bzw. ausgebildete zweite Ritzel vorhanden. Denkbar ist auch, dass das Achsantriebszahnrad des Differentials als ein (weiteres) Zahnrad des Getriebes, insbesondere des Stirnradgetriebes betrachtet wird, was von der Betrachtungsweise abhängt. Jedenfalls steht das Achsantriebszahnrad des Differentials mit dem auf der Zwischenwelle ausgebildeten - zweiten - Ritzel in Eingriff.

Der Antriebsstrang ist insbesondere als ein sogenannter Koaxial-Antrieb bzw. als ein koaxialer Antriebsstrang ausgebildet. Hierbei ist nun zur Anordnung und/oder zur Lagerung des Differentials ein Lagerschild vorgesehen, wobei der Kraftfluss über das Achsantriebszahnrad des Differentials auf die insbesondere beiden Radantriebswelle übertragen wird und mindestens eine Radantriebswelle koaxial zur Antriebswelle, insbesondere zumindest teilweise innerhalb der als Hohlwelle ausgebildeten Antriebswelle angeordnet ist.

Dieser so ausgebildete und im Stand der Technik bekannte Antriebsstrang weist insbesondere auch mehrere Gehäusebereiche/Gehäuseteile auf. Insbesondere einen ersten Gehäusebereich/erstes Gehäuseteil zur Lagerung und/oder Umschließung des Antriebsmotors, insbesondere des Elektromotors und der Antriebswelle sowie einen zweiten Gehäusebereich/zweites Gehäuseteil zur Umschließung und/oder Begrenzung des Differentials sowie des die entsprechenden Zahnräder aufweisenden Getriebebereiches.

Bei dem im Stand der Technik bekannten Antriebsstrang ist das Achsantriebszahnrad des Differentials nun so vorgesehen und/oder vorhanden bzw. angeordnet, so dass dieses in einem, im unteren Bereich der Gehäuse vorgesehenen und/oder vorhandenen Ölsumpf zumindest teilweise planscht. Anders ausgedrückt, es ist im Wesentlichen ein Ölsumpfbereich vorgesehen, in dem das Achsantriebszahnrad des Differentials zumindest teilweise planschend angeordnet ist. Da bei dem zuvor erläuterten Antriebsstrang das Differential im Wesentlichen mittig achszentriert, insbesondere mittig achszentriert wie die Elektromaschine, angeordnet ist, weist der Lagerschild eine Durchgangsöffnung zur Anordnung und/oder Durchführung mindestens einer Radantriebswelle auf. Weiterhin weist der Lagerschild zusätzlich eine Lageraufnahme zur Anordnung und/oder zur Aufnahme eines Lagers auf, mit dessen Hilfe dann das Differential beziehungsweise das Differentialgehäuse und/oder das Achsantriebszahnrad des Differentials auf einer Seite (von zwei Seiten) lagerbar ist. Hierbei wird der Lagerschild dann zwischen dem Antriebsmotor, insbesondere der Elektromaschine (dem Elektromotor) und dem Differentialkörper vorgesehen und/oder angeordnet, insbesondere also im Wesentlichen "motorseitig" angeordnet.

Bei dem im Stand der Technik bekannten Antriebsstrang weist der Lagerschild einen flanschartigen Umfangsbereich zur Befestigung des Lagerschildes auf, sowie auch einen Lagerschildkörper, der sich im Wesentlichen rechtwinklig zum flanschartig ausgebildeten Umfangsbereich erstreckt. Durch diese Ausbildung wird mit Hilfe von weiteren dann auskragenden Wandungen eine Lageraufnahme gebildet. Hierbei erstreckt sich der flanschartige Umfangsbereich im Wesentlichen einseitig, nach oben von der Mittelachse der Radantriebswelle beziehungsweise von der Antriebswelle radial nach außen weg. Schließlich ist ein sehr breiter, für den Antriebsmotor und das Differential/Getriebe gemeinsam vorhandener Ölsumpfbereich vorgesehen, in dem das Achsantriebszahnrad des Differentials zumindest teilweise planscht.

Der im Stand der Technik bekannte Antriebsstrang ist aber noch nicht optimal ausgebildet. Einerseits nimmt der Lagerschild aufgrund seiner konstruktiven Ausgestaltung einen relativ großen Raum ein beziehungsweise benötigt bei der Montage und in seiner montierten Endposition einen entsprechenden großen Raumbedarf. Weiterhin hat der Antriebsstrang einen relativ großen/breiten "gemeinsamen" Ölsumpfbereich für bestimmte Komponenten wie den Antriebsmotor und das Differential/Getriebe. Dies führt insbesondere beim Eintauchen des Achsantriebszahnrades in den Ölsumpfbereich zu hohen Planschverlusten, da der Ölsumpfbereich nicht nur relativ groß/breit ist, sondern auch die Tiefe des gemeinsamen Ölsumpfbereiches auch im Wesentlichen über die Breite des Ölsumpfbereiches gleich ist. Dieser dadurch auch bedingte konstruktive Aufwand ist mit entsprechenden weiteren Kosten verbunden, wobei der Wirkungsrad des zuvor erläuterten Antriebsstranges noch nicht optimal ist.

In der US 2016 / 123455 A1 ist ein weiterer Antriebsstrang eines Kraftfahrzeuges gezeigt, wobei der Antriebsstrang eine Antriebswelle, ein Getriebe, ein Differential und zwei Radantriebswellen aufweist, wobei das Differential ein Achsantriebszahnrad aufweist und das Achsantriebszahnrad mit einem Zahnrad des Getriebes in Eingriff steht. Ein Ölsumpfbereich ist in einem unteren Bereich eines Gehäuses ausgebildet. Das Achsantriebszahnrad und ein weiteres Zahnrad des Getriebes sind teilweise im Ölsumpfbereich planschend angeordnet. Die Zahnräder des Getriebes inklusive des Achsantriebszahnrads bilden zwei Zahnradstufen aus. Zwei Zahnräder des Getriebes sind auf einer Zwischenwelle angeordnet. Die beiden Radantriebswellen sind koaxial zur Antriebswelle angeordnet. Das Gehäuse ist in der Axialrichtung der Radantriebswellen aus mehreren Teilabschnitten ausgebildet. Ein Trennelement, welches eine Komponente des Gehäuses ist, hat eine zylindrische Form und weist eine Trennwand auf, die das Innere des Gehäuses in einen ersten Aufnahmeraum und einen zweiten Aufnahmeraum unterteilt. Die erste Zahnradstufe ist in dem ersten Aufnahmeraum untergebracht. Die zweite Zahnradstufe ist in dem zweiten Aufnahmeraum untergebracht. Mittels des ersten Aufnahmeraums ist ein erster Ölsumpfbereich und mittels des zweiten Aufnahmeraums ist ein zweiter Ölsumpfbereich ausbildbar. Ein erster Gehäuseteil ist an einer Seite des Trennelements befestigt und weist eine erste Seitenwand auf, die den ersten Aufnahmeraum definiert. Ein zweiter Gehäuseteil ist an der anderen Seite des Trennelements befestigt und weist eine zweite Seitenwand auf, die den zweiten Aufnahmeraum definiert. In einem dritten Gehäuseteil ist im Wesentlichen ein Elektromotor untergebracht. Der erste Gehäuseteil, der zweite Gehäuseteil, der dritte Gehäuseteil und das Trennelement, die die Komponenten des Gehäuses darstellen, sind untereinander über Schrauben in einer öldichten Weise verbunden. Das Differenzial ist mit einem Lager an dem Trennelement gelagert, so dass das Trennelement die Funktion eines Lagerschildes aufweist.

Die US 2019 / 032769 A1 offenbart einen Antriebstrang eines Kraftfahrzeuges mit 4-Rad-Antrieb. Der Antriebsstrang weist einen Antriebsmotor, ein Transmissionsgetriebe, ein Transfergetriebe, eine Kupplung, ein Vorderraddifferenzial und eine Kardanwelle auf. Zur Übertragung eines Drehmomentes ist der Antriebsmotor mit dem Transfergetriebe mittels des Transmissionsgetriebes verbunden. Mittels des Transfergetriebes und der Kupplung ist das Drehmoment über die Kardanwelle an das Vorderraddifferenzial weiterleitbar. Mittels der Kupplung ist einstellbar, wie groß der Anteil des an das Vorderraddifferenzial übertragenen Drehmomentes in Bezug zum gesamten Drehmoment sein soll. Das Transfergetriebe weist ein Gehäuse mit einem ersten Gehäuseteil und einem zweiten Gehäuseteil, eine Zahnradstufe, einen ersten Ölbehälter, einen zweiten Ölbehälter sowie eine erste und eine zweite Trennwand auf. Das Gehäuse weist einen unteren Ölsumpfbereich auf, in welchem ein unteres Zahnrad der einen Zahnradstufe planschend angeordnet ist. Das untere Zahnrad ist mittels jeweils eines Lagers an dem ersten Gehäuseteil und - auf der gegenüberliegenden Seite des Zahnrades - an dem zweiten Gehäuseteil gelagert. Der erste Ölbehälter ist mittels der ersten Trennwand und der zweite Ölbehälter ist mittels der zweiten Trennwand vom Ölsumpfbereich separiert. Der erste Ölbehälter ist neben einem äußeren Umfang des unteren Zahnrades angeordnet, der zweite Ölbehälter neben einer Stirnseite des unteren Zahnrades. Die beiden Ölbehälter sind mit dem Ölsumpfbereich über ein Verbindungsloch verbunden. Weiterhin weist ein jeder der beiden Ölbehälter einen Überlauf auf, welcher mittels der jeweiligen Trennwand ausgebildet ist. Somit ist ein Fluidaustausch zwischen dem jeweiligen Ölbehälter zum Ölsumpfbereich über das jeweilige Verbindungsloch und den jeweiligen Überlauf ermöglicht. Die beiden Überläufe weisen zur Regulierung verschiedener Ölstände unterschiedliche Höhen auf.

In der JP 2005278319 A ist ein Antriebsstrang für ein Fahrzeug mit einer Elektromaschine mit einer Antriebswelle, mit einem Getriebe, mit einem Differential, und mit zwei Radantriebswellen gezeigt. Das Differential weist ein Achsantriebszahnrad auf und das Achsantriebszahnrad steht mit mindestens einem Zahnrad des Getriebes in Eingriff. Es sind mindestens drei Ölsumpfbereiche vorhanden, wobei das Achsantriebszahnrad in einem der Ölsumpfbereiche zumindest teilweise planschend angeordnet ist. Zur Lagerung des Differentials dient eine Außenwand eines Gehäuses und eine Zwischenwand des Gehäuses, wobei die Außenwand und die Zwischenwand dazu jeweils eine Lageraufnahme zur Aufnahme eines Lagers aufweisen. Die Zwischenwand übernimmt somit die Funktion eines Lagerschildes. Mittels der Zwischenwand sind ein erster und ein zweiter Ölsumpfbereich voneinander getrennt, wobei das Achsantriebszahnrad in dem zweiten, angrenzend zu der Außenwand ausgebildeten Ölsumpfbereich zumindest teilweise planschend angeordnet ist. Die Zwischenwand weist zur Realisierung einer Strömungsverbindung zwischen dem ersten und dem zweiten Ölsumpfbereich eine Durchtrittsöffnung auf. Das Öl kann frei durch diese Durchtrittsöffnung hindurchströmen. Ein Ölstand im zweiten Ölsumpfbereich kann nicht unter ein bestimmtes Niveau sinken, wobei dieses bestimmte Niveau durch den unteren Rand der Durchtrittsöffnung definiert ist. Von dem Achsantriebszahnrad nach oben geschleudertes Öl wird über das Lager des Differentials einem ersten Öl-Sammelbereich zugeführt. Der erste Öl-Sammelbereich ist innerhalb eines Rotors der Elektromaschine ausgebildet. Die während der Rotation des Rotors der Elektromaschine auftretenden Zentrifugalkräfte führen dazu, dass das Öl aus dem ersten Öl-Sammelbereich einem - radial außerhalb des ersten Öl-Sammelbereiches ausgebildeten - zweiten Öl-Sammelbereich zugeführt wird. Von dem zweiten Öl-Sammelbereich strömt das Öl in einen dritten Ölsumpfbereich zurück.

Aus der JP 2018 087615 A ist ein Antriebsstrang für ein Fahrzeug mit einer Antriebswelle, mit einem Getriebe, mit einem Differential, und mit zwei Radantriebswellen gezeigt. Das Differential weist ein Achsantriebszahnrad auf und das Achsantriebszahnrad steht mit mindestens einem Zahnrad des Getriebes in Eingriff. Es ist ein Ölsumpfbereich vorhanden, wobei ein Zahnrad des Getriebes und auch das Achsantriebszahnrad in dem Ölsumpfbereich zumindest teilweise planschend angeordnet sind. Zur Lagerung des Differentials dient eine Außenwand eines Gehäuses und eine Zwischenwand des Gehäuses, wobei die Außenwand und die Zwischenwand zur Lagerung des Differentials jeweils eine Lageraufnahme zur Aufnahme eines Lagers aufweisen. Die Zwischenwand weist eine Öffnung für eine Zwischenwelle des Getriebes auf. Das sich im Ölsumpfbereich sammelnde Öl wird mit einem an dem zumindest einen Zahnrad des Getriebes angeordneten Schaufelrad zum Teil zu einem Ölbehälter gefördert. Das mit dem Schaufelrad nach oben geschleuderte Öl läuft zu einem weiteren Teil direkt zwischen dem Schaufelrad und der Zwischenwand zurück in den Ölsumpfbereich. Dieser weitere Teil des - zwischen dem Schaufelrad und der Zwischenwand zurück in den Ölsumpfbereich laufenden - Öls ist mit Hilfe von an dem Schaufelrad ausgebildeten Barrierestegen minimierbar. Das sich im Ölsumpfbereich sammelnde Öl wird ebenso mit dem Achsantriebszahnrad zu dem Ölbehälter gefördert. Es ist denkbar, dass an dem Achsantriebszahnrad ein weiteres Schaufelrad zur Ölförderung angeordnet ist. Der Ölbehälter ist angrenzend zu einer in axialer Richtung des Achsantriebszahnrads angeordneten bzw. ausgebildeten Seitenwand des Gehäuses über die komplette axiale Länge des Gehäuses angeordnet und / oder ausgebildet. Der Ölbehälter ist somit radial außerhalb des Achsantriebszahnrades angeordnet. Über nicht näher spezifizierte Ölkanäle wird das Öl von dem Ölbehälter zu den zu schmierenden Bauteilen des Antriebsstranges wie z.B. Zahnrädern und / oder Lagern geführt.

Der Erfindung liegt daher die Aufgabe zugrunde, den bekannten Antriebsstrang, von dem die Erfindung ausgeht, nun derart auszugestalten und weiterzubilden, dass einerseits Planschverluste verringert sind, andererseits der Wirkungsgrad erhöht ist sowie insbesondere auch die Anbindung eines Differentials auf einfache und raumsparende Weise ermöglicht und/oder die Kosten verringert sind.

Die zuvor aufgezeigte Aufgabe ist nun zunächst durch die Merkmale des Patentanspruches 1 gelöst.

Der Lagerschild weist nun mindestens einen sich zumindest teilweise radial in Richtung des Ölsumpfbereiches erstreckenden flanschartigen Umfangsbereich auf. Hierbei ist der Lagerschild und/oder der Umfangsbereich nun derart ausgebildet und/oder angeordnet, so dass der Ölsumpfbereich hierdurch in einen ersten und in einen zweiten Ölsumpfbereich geteilt ist. Dies hat zunächst den Vorteil, dass nun zwei Ölsumpfbereiche vorgesehen bzw. vorhanden und/oder ausgebildet sind, die an die jeweiligen Gegebenheiten optimal anpassbar sind. Einerseits können nun Planschverluste des Achsantriebszahnrades verringert, andererseits der jeweilige Ölsumpfbereich an die jeweiligen spezifischen Gegebenheiten optimal adaptiert und/oder angepasst werden. Insbesondere können die jeweiligen ersten und zweiten Ölsumpfbereiche nun unterschiedliche Tiefen beziehungsweise dadurch bedingt auch unterschiedliche hydraulische Ölstände aufweisen. Bei der bevorzugten Ausführungsform ist die Höhe des Öls bzw. dessen Niveau im ersten und zweiten Ölsumpfbereich gleich hoch beziehungsweise liegt auf einer gleichen Ebene, wobei die jeweilige Tiefe des jeweiligen Ölsumpfbereiches aber unterschiedlich ausgebildet ist, was im Folgenden noch näher ausgeführt werden darf.

Der erste Ölsumpfbereich kann volumenmäßig nun geringer ausgebildet werden als der zweite Ölsumpfbereich. Dadurch, dass das Achsantriebszahnrad im ersten Ölsumpfbereich planschend angeordnet ist, werden die Planschverluste verringert und der Wirkungsgrad des Antriebsstranges ist entsprechend erhöht.

Durch die Realisierung des flanschartigen Umfangsbereich des Lagerschildes, der sich in Richtung des Ölsumpfbereiches erstreckt, insbesondere den gesamten Ölsumpfbereich in einen ersten und einen zweiten Ölsumpfbereich teilt, kann mit Hilfe des Lagerschildes ein Strom des Öls aus dem zweiten Ölsumpfbereich in den ersten Ölsumpfbereich zumindest teilweise verhindert und/oder gezielt gesteuert werden. Dies führt insbesondere auch zu einer Beruhigung des Öls im ersten Ölsumpfbereich, zumindest können Wellen, die beispielsweise im zweiten Ölsumpfbereich durch sich bewegende Komponenten entstehen, nicht in den ersten Ölsumpfbereich gelangen, insbesondere weil der Lagerschild hierzu zumindest teilweise eine entsprechende Abschottung des ersten und zweiten Ölsumpfbereiches zueinander realisiert. Weiterhin kann mit Hilfe des Lagerschildes der Zustrom von Öl, insbesondere aus dem zweiten Ölsumpfbereich in den ersten Ölsumpfbereich (oder umgekehrt) zumindest teilweise gesteuert und/oder reguliert werden, insbesondere ist eine gezielte und/oder geführte Ölsammlung, insbesondere zu einem separat angeordneten Ölbehälter ermöglicht, was im Folgenden auch noch näher erläutert werden darf.

Die Lageraufnahme des Lagerschildes weist eine Abstützwandung zur axialen Abstützung des in der Lageraufnahme angeordneten Lagers auf. Der flanschartige Umfangsbereich des Lagerschildes und die Abstützwandung liegen im Wesentlichen in einer beziehungsweise in der gleichen Ebene und können entsprechend ausgebildet, insbesondere einstückig ausgebildet sein, insbesondere kann der Lagerschild als ein Gussteil hergestellt werden. Dadurch, dass die Abstützwandung und der flanschartige Umfangsbereich des Lagerschildes im Wesentlichen in ein und dergleichen Ebene liegen, kann entsprechender Raum bei der Anordnung des Lagerschildes zwischen dem Differential und dem den Antriebsmotor, insbesondere den Elektromotor umschließenden Gehäuseteil - verglichen zum Stand der Technik - eingespart werden.

Die Lageraufnahme des Lagerschildes ist durch eine im Wesentlichen senkrecht zur Ebene der Abstützwandung und/oder des Umfangsbereiches zumindest teilweise ringförmig verlaufende kragenförmige Wandung zumindest teilweise begrenzt. Hierdurch bedingt ist die Aufnahme und Anordnung des Lagers innerhalb des Lagerschildes bzw. in der Lageraufnahme entsprechend vereinfacht.

Der Lagerschild weist radial entgegengesetzt zur Richtung des Ölsumpfbereiches einen im Wesentlichen abgeflachten Bereich zur Anordnung mindestens eines Ölbehälters auf. Anders ausgedrückt, auf dem oberen Bereich des Lagerschildes, der abgeflacht ausgebildet ist, ist ein Ölbehälter dann auf einfache Weise anordenbar.

Damit die Schmierung des in der Lageraufnahme des Lagerschildes angeordneten Lagers gewährleistet ist, weist der Lagerschild zur Schmierung dieses in der Lageraufnahme angeordneten Lagers einen zumindest teilweise rampenförmig ausgebildeten Öl-Zulaufbereich auf. Dieser rampenförmig ausgebildete Öl-Zulaufbereich ist dann mit dem Öl eines auf dem flachen Bereich des Lagerschildes angeordneten Ölbehälters versorgbar bzw. strömungstechnisch über einen Öl-Austrittsbereich des Ölbehälters verbindbar. Insbesondere über den rampenförmigen Öl-Zulaufbereich läuft das Öl zu dem in der Lageraufnahme angeordneten Lager.

Der Lagerschild weist zur Realisierung einer Strömungsverbindung zwischen dem ersten und dem zweiten Ölsumpfbereich mindestens eine Durchtrittsöffnung auf oder ist so angeordnet und/oder ausgebildet, dass zumindest zwischen dem äußersten -unteren, sich in Richtung des Ölsumpfbereiches erstreckenden- Umfangsbereichs bzw. dem äußeren Umfangsrandbereich und einem Gehäuseteil (oder mehreren Gehäuseteilen) ein Ringspalt vorgesehen und/oder ausgebildet ist. Hierdurch bedingt kann insbesondere aus dem zweiten Ölsumpfbereich Öl vom zweiten Ölsumpfbereich in den ersten Ölsumpfbereich strömen beziehungsweise fließen (oder auch umgekehrt). Eine gezielte und/oder geführte Ölsammlung beziehungsweise Ölführung, die im Folgenden noch näher erläutert werden wird, ist daher jedenfalls dann auch denkbar und möglich.

Das Getriebe ist insbesondere als ein Stirnradgetriebe ausgebildet und weist mindestens zwei Zahnradstufen auf. Insbesondere ist eine erste Zahnradstufe aus einem ersten Ritzel und einem ersten Zahnrad gebildet, wobei das erste Ritzel auf der Antriebswelle ausgebildet ist und das Zahnrad auf einer Zwischenwelle sitzt bzw. angeordnet ist. Weiterhin weist dann die Zwischenwelle ein weiteres Zahnrad, hier dann insbesondere ein zweites Ritzel auf, das mit dem Achsantriebszahnrad des Differentials in Eingriff steht. Das Getriebe wird insbesondere gebildet aus dem ersten Ritzel, dem mit dem ersten Ritzel in eingriff stehendem und auf der Zwischenwelle angeordnetem Zahnrad und dem zweiten Ritzel, wobei das erste Ritzel und das auf der Zwischenwelle angeordnete Zahnrad die erste Zahnradstufe und das zweite Ritzel und das Achsantriebszahnrad die zweite Zahnradstufe des Getriebes ausbilden. Weiterhin ist mit Hilfe des Lagerschildes und dessen Ausbildung sowie insbesondere auch durch die Ausbildung des Achsantriebszahnrades eine gezielte Ölführung vom ersten Ölsumpfbereich zum Ölbehälter auf einfache Weise realisierbar, was im Folgenden ebenfalls nochmals kurz näher erläutert werden darf.

Im Ergebnis sind die eingangs genannten Nachteile vermieden und entsprechende Vorteile erzielt.

Es gibt nun eine Vielzahl von Möglichkeiten, den erfindungsgemäßen Antriebsstrang in vorteilhafter Art und Weise auszugestalten und weiterzubilden. Hierfür darf zunächst auf die dem Patentanspruch 1 nachgeordneten Patentansprüche verwiesen werden. Im Folgenden darf eine bevorzugte Ausführungsform des Antriebsstranges anhand der nachfolgenden Zeichnung und der nachfolgenden Beschreibung näher erläutert werden. In der Zeichnung zeigt:
- Fig. 1: einen erfindungsgemäßen Antriebsstrang in schematischer Darstellung teilweise im Schnitt mit den jeweiligen Komponenten,
- Fig. 2: in schematischer Darstellung einen vergrößerten Ausschnitt des in Fig. 1 dargestellten Antriebsstranges mit der schematischen Darstellung des ersten und zweiten Ölsumpfbereiches sowie der schematischen Darstellung eines Ölstandes bzw. Ölniveaus,
- Fig. 3a, 3b: einen Lagerschild, schematisch dargestellt von der Rückseite (Fig. 3a) beziehungsweise von der Vorderseite (Fig. 3b), letztere insbesondere mit einem in der Lageraufnahme angeordnetem Lager, sowie eines in Fig. 3a und Fig. 3b schematisch dargestellten, auf dem abgeflachten Bereich des Lagerschildes angeordnetem Ölbehälter in jeweiliger schematischer Darstellung,
- Fig. 4a, 4b: in teilweiser Zusammenschau bzw. schematischer Darstellung die gewünschte Anordnung des Lagerschildes mit seiner Rückseite beziehungsweise die entsprechende Zentrierung des Lagerschildes an einem Gehäuseteil,
- Fig. 5: der am Gehäuseteil angeordnete Lagerschild mit der Lageraufnahme ohne Lager in schematischer Darstellung,
- Fig. 6: in schematischer, teils geschnittener schematischer Darstellung das mit Hilfe eines Lagers und dem Lagerschild gelagerte Differential beziehungsweise das Achsantriebszahnrad in montierter Position, und
- Fig. 7: in teils schematischer Darstellung, teils geschnitten den ersten Ölsumpfbereich mit Ölstand bzw. dem Ölniveau und dem Strom bzw. der Zuführung des Öls mit Hilfe des Achsantriebszahnrades und des angeordneten Lagerschildes in Richtung des Ölbehälters.

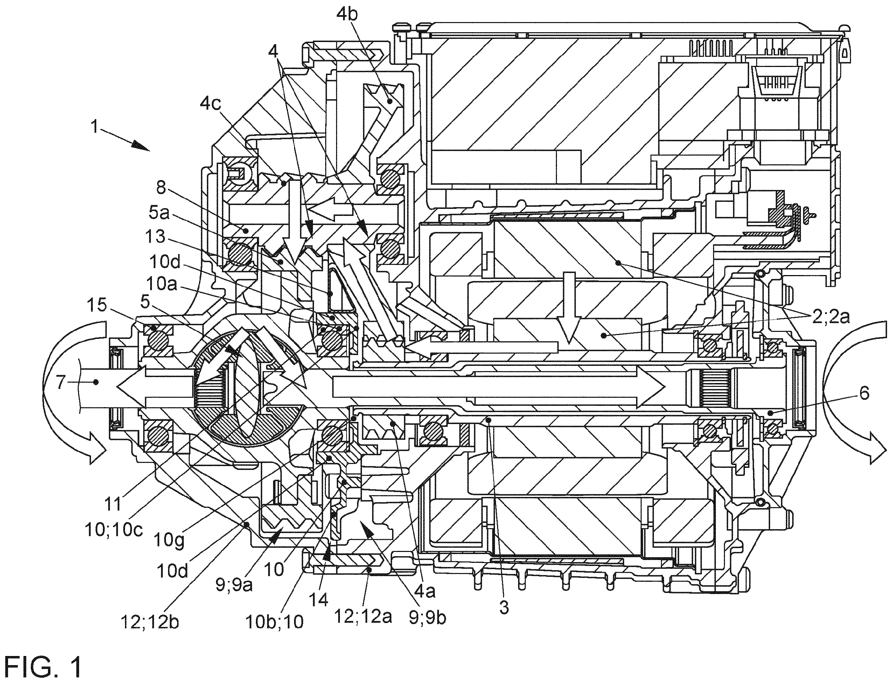

Die Fig. 1 bis 7 zeigen, zumindest teilweise einen Antriebsstrang 1 für ein Fahrzeug, insbesondere für ein nicht näher dargestelltes Kraftfahrzeug. Der Antriebsstrang 1 ist insbesondere in größerer Übersichtlichkeit mit allen wesentlichen Komponenten in Fig. 1 zunächst schematisch dargestellt.

Der Antriebsstrang 1 weist im Wesentlichen hier einen Antriebsmotor 2, insbesondere einen Elektromotor 2a, eine Antriebswelle 3, ein Getriebe 4, ein Differential 5 und zwei Radantriebswellen 6 und 7 auf. Gut zu erkennen ist auch, dass das Differential 5 ein Achsantriebszahnrad 5a aufweist. Das Getriebe 4, wird hier insbesondere gebildet durch ein erstes Ritzel 4a, das mit einem auf einer Zwischenwelle 8, insbesondere fest angeordnetem Zahnrad 4b in Eingriff steht. Auf der Zwischenwelle 8 ist ein weiteres, hier (dann so genanntes "zweites") Ritzel 4c ausgebildet beziehungsweise vorgesehen, das dann mit dem Achsantriebszahnrad 5a wirksam in Eingriff steht. Das Getriebe 4, wird insbesondere funktional daher aus dem ersten Ritzel 4a, dem Zahnrad 4b, dem zweiten Ritzel 4c und dem Achsantriebszahnrad 5a sowie der Zwischenwelle 8 gebildet. Insbesondere ist das Getriebe 4 bei der hier dargestellten bevorzugten Ausführungsform als ein Stirnradgetriebe ausgebildet ist und es sind insbesondere zwei Zahnradstufen vorhanden, die insbesondere dann durch das erste Ritzel 4a und das Zahnrad 4b (erste Zahnradstufe) sowie durch das zweite Ritzel 4c und das Achsantriebszahnrad 5a (zweite Zahnradstufe) gebildet sind beziehungsweise gebildet werden. Die beiden Radantriebswellen 6 und 7 treiben die entsprechenden hier nicht dargestellten Räder des Kraftfahrzeuges an, wobei hier insbesondere die Radantriebswelle 6 sich koaxial in Fig. 1 nach rechts durch die als Hohlwelle ausgebildete Antriebswelle 3 hindurch erstreckt beziehungsweise entsprechend durch die Antriebswelle 3 sich hindurch erstreckend angeordnet ist.

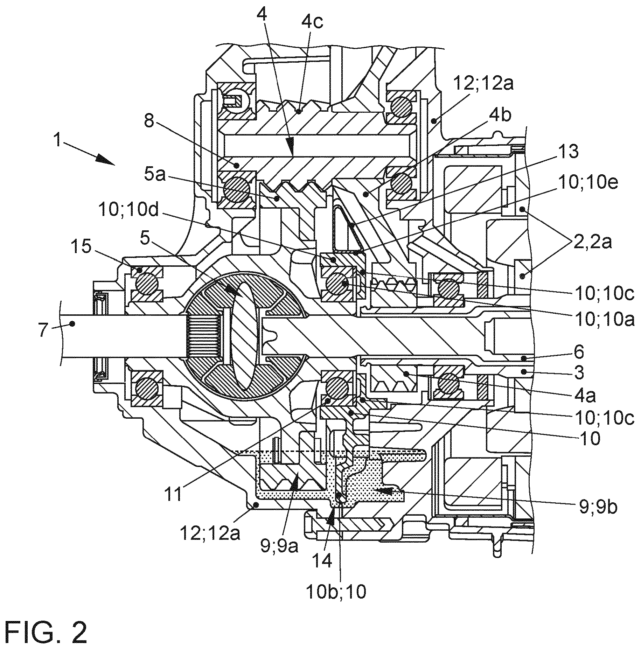

Wie weiterhin in Fig. 1 und Fig. 2 gut zu erkennen ist, ist ein Ölsumpfbereich 9 vorgesehen beziehungsweise vorhanden, wobei insbesondere hier nun das Achsantriebszahnrad 5a zumindest teilweise im Ölsumpfbereich 9 planschend angeordnet ist. Je nach Ausführungsform ist auch denkbar, dass zumindest teilweise auch andere Zahnräder des Getriebes im Ölsumpfbereich planschend angeordnet sind.

Zur Anordnung und/oder zur Lagerung des Differentials 5 ist mindestens ein Lagerschild 10 vorgesehen und/oder vorhanden. Der Lagerschild 10 weist mindestens eine Lageraufnahme 10a zur Aufnahme und/oder zur Lagerung eines Lagers 11 auf.

Der in den Fig. 1 und 2 zumindest teilweise dargestellte Antriebsstrang 1 kann entsprechend weitere und/oder zusätzliche Komponenten aufweisen. Insbesondere kann der Motor 2, insbesondere als eine Elektromaschine, aber auch als Verbrennungsmotor ausgebildet sein, bei der hier dargestellten bevorzugten Ausführungsform ist der Antriebsmotor 2 insbesondere als ein Elektromotor 2a ausgebildet. Dies ist abhängig von der jeweiligen Dimensionierung und/oder Anordnung bzw. Ausbildung und /oder Verwendung (Einsatz) des Antriebsstranges.

In Fig. 1 ist mit den entsprechenden Pfeilen der Kraftfluss vom Antriebsmotor 2 zu den hier nicht im einzelnen dargestellten Rädern beziehungsweise zu den Radantriebswellen 6 und 7 schematisch dargestellt.

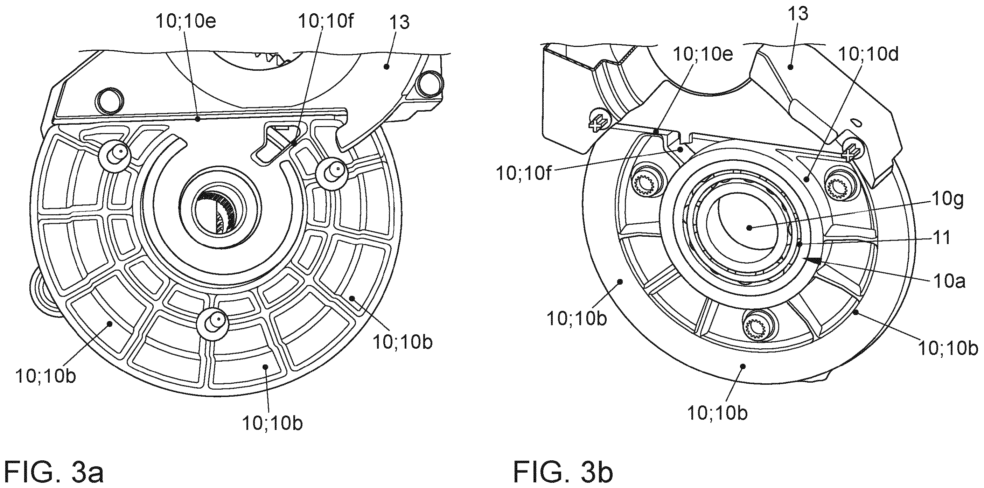

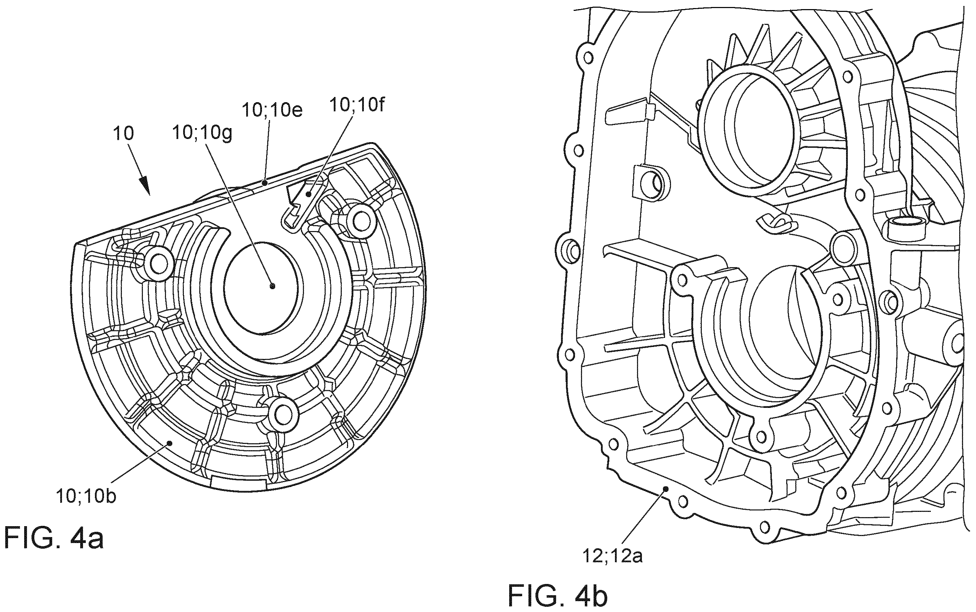

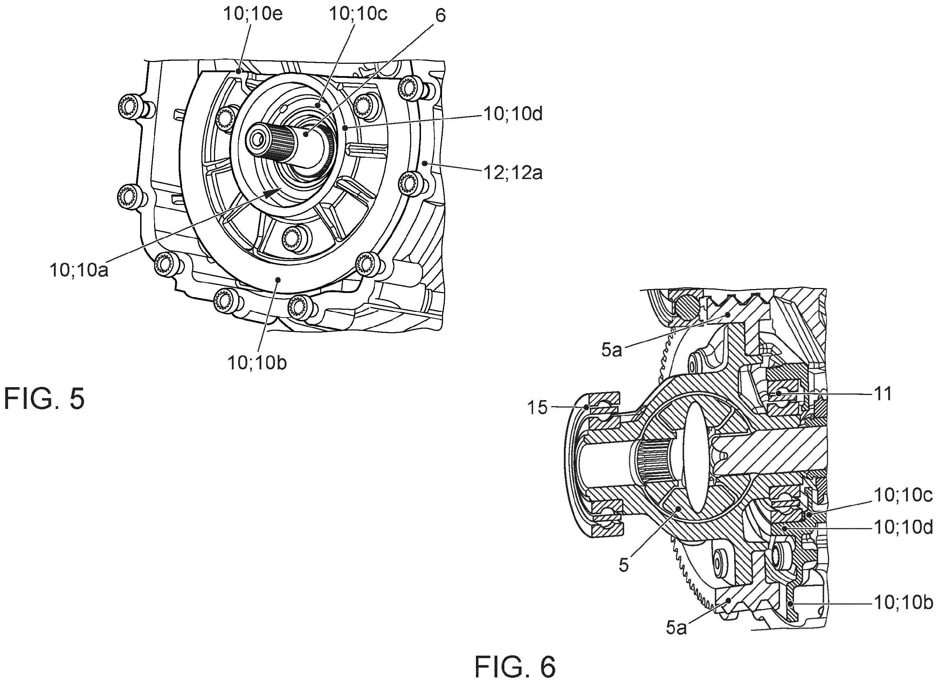

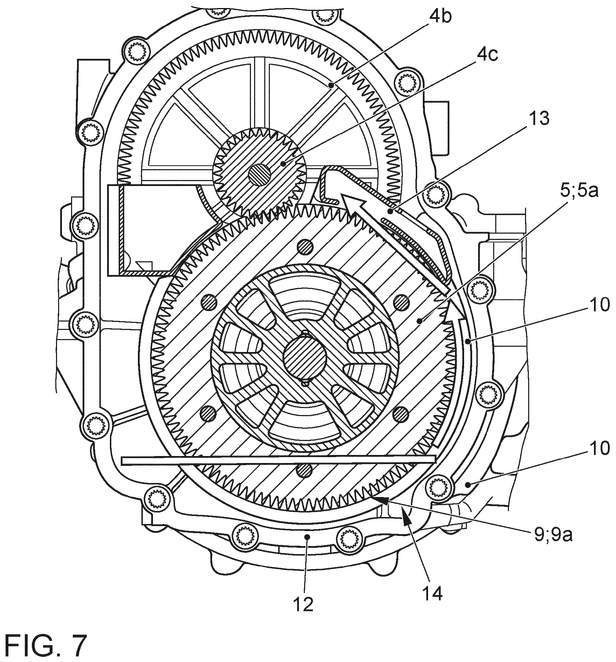

Der hier zwischen dem Differential 5 und dem Antriebsmotor 2 angeordnete Lagerschild 10 ist ebenfalls in den Fig. 1 und 2 gut zu erkennen beziehungsweise ist dessen Anordnung und Positionierung gut zu erkennen, wobei die Ausbildung des Lagerschildes 10, dessen Rückseite in Fig. 3a und dessen Vorderseite in Fig. 3b erkennbar ist beziehungsweise dessen Zentrierung am Gehäuse 12 bzw. am Gehäuseteil 12a schematisch in den Fig. 4a und 4b dargestellt sein soll, auch in den Fig. 7 relativ zum dort erkennbaren Achsantriebszahnrad 5a dargestellt ist. In diesem Zusammenhang darf auch hier nochmals auf die Fig. 5 und 6 verwiesen werden.

Der Lagerschild 10 weist mindestens einen sich radial in Richtung des Ölsumpfbereiches 9 erstreckenden flanschartigen Umfangsbereich 10b aufweist, wobei der Lagerschild 10 und/oder der Umfangsbereich 10b derart ausgebildet und/oder angeordnet ist beziehungsweise sind, so dass der Ölsumpfbereich 9 hierdurch in einen ersten und in einen zweiten Ölsumpfbereich 9a und 9b geteilt ist. Letzteres ist insbesondere gut aus der Fig. 2 und der dortigen schematischen Darstellung der jeweiligen Ölsumpfbereiche 9a und 9b erkennbar.

Durch die Aufteilung des gesamten Ölsumpfbereiches 9 in einen ersten und einen zweiten Ölsumpfbereich 9a und 9b werden entscheidende Vorteile erzielt, insbesondere wird der Wirkungsgrad des Antriebsstranges 1 verbessert, insbesondere werden Planschverluste beim Achsantriebszahnrad 5a verringert. Auch erfolgt eine "Beruhigung" des Ölsumpfes im ersten Ölsumpfbereich 9a, da keine Wellenbewegungen vom zweiten Ölsumpfbereich 9b in den ersten Ölsumpfbereich 9a gelangen können. Durch den Lagerschild 10 wird quasi eine zumindest teilweise, insbesondere im wesentlichen vollständige Trennung des Olsumpfbereiches 9 in die beiden anderen Ölsumpfbereiche 9a und 9b realisiert.

Insbesondere ist, dies ist aus der Fig. 2 erkennbar, der erste Ölsumpfbereich 9a volumenmäßig geringer ausgebildet, als der zweite Ölsumpfbereich 9b. Hierbei ist das Achsantriebszahnrad 5a im ersten Ölsumpfbereich 9a planschend angeordnet. Dadurch, dass der erste Ölsumpfbereich 9a volumenmäßig geringer ausgebildet ist, insbesondere in seiner vertikalen Höhe gemessen einen niedrigeren Ölstand/niedrigeres Ölniveau aufweist als der zweite Ölsumpfbereich 9b können die Planschverluste des Achsantriebszahnrades 5a ebenfalls verringert werden.

Die Fig. 1 und 2, sowie auch die Fig. 6 verdeutlichen, dass mit Hilfe des Lagerschildes 10 ein Strom des Öls aus dem zweiten Ölsumpfbereich 9b in den ersten Ölsumpfbereich 9a zumindest teilweise verhindert ist, insbesondere mit Hilfe des Lagerschildes 10 der Zustrom von Öl aus dem zweiten Ölsumpfbereich 9b in den ersten Ölsumpfbereich 9a (oder umgekehrt) zumindest teilweise regulierbar und/oder gezielt steuerbar ist. Insbesondere wird mit Hilfe des Lagerschildes 10 eine gezielte und/oder geführte Ölsammlung und/oder entsprechende Ölführung ermöglicht, die im Folgenden, insbesondere auch anhand der Fig. 7 nochmals näher erläutert werden darf.

Im Ergebnis sind durch eine relativ konstruktiv einfache Ausgestaltung des Lagerschildes 10 mehrere Vorteile realisiert.

Konstruktiv ist der Lagerschild 10 besonders vorteilhaft ausgebildet. Die Lageraufnahme 10a des Lagerschildes 10 weist eine Abstützwandung 10c zur axialen Abstützung des in der Lageraufnahme 10a angeordneten beziehungsweise anzuordnenden Lagers 11 auf. Letzteres ist insbesondere gut auch aus den Fig. 5 und 6 ersichtlich. Der zumindest teilweise flanschartige Umfangsbereich 10b des Lagerschildes 10 und die Abstützwandungen 10c des Lagerschildes 10 liegen im Wesentlichen in einer und dergleichen Ebene beziehungsweise sind entsprechend in einer gleichen Ebene liegend ausgebildet. Dies führt dazu, dass der Lagerschild 10 im Wesentlichen keinen sich in axialer Richtung erstreckenden Körper aufweist, der die räumliche axiale Größe des Lagerschildes unnötig vergrößert. Dadurch wird konstruktionstechnisch nicht nur eine einfachere Montage der Komponenten realisiert, sondern es werden auch entsprechende Kosten, insbesondere in Bezug auf die Ausbildung aller weiteren Gehäusebereiche und/oder Gehäuseteile (12a/12b) reduziert beziehungsweise dies verringert. Mit dem Ausdruck "im Wesentlichen" ist hier insbesondere gemeint, dass der axiale Abstand der Abstützwandung 10c zum flanschartigen Umfangbereiches 10b (von der jeweiligen Mitte der jeweiligen Wandungen gemessen) nicht größer als 20 mm beträgt, insbesondere im Bereich von bis 10 mm bis 20 mm liegt, insbesondere nicht größer als 15 mm ist. Mit Hilfe der Abstützwandung 10c bzw. einer Verlängerung der Abstützwandung 10c radial nach innen, kann zusätzlich eine Ölansammlung für das erste Ritzel 4a realisiert werden.

Die Lageraufnahme 10a des Lagerschildes 10 ist durch eine im Wesentlichen senkrecht zur Ebene der Abstützwandung 10c und/oder des Umfangbereiches 10b ringförmig verlaufende kragenförmige Wandung 10d zumindest teilweise, insbesondere umfänglich vollständig begrenzt. Letzteres ist insbesondere aus der Fig. 5 gut ersichtlich. Hierbei ist mit dem Ausdruck "im Wesentlichen" gemeint, dass bei den entsprechenden Winkeln geringe Abweichungen von +/- 3 bis 5 Grad auftreten können.

Insbesondere die Fig. 3a und 3b sowie die Fig. 4a zeigen, dass der Lagerschild 10 radial entgegengesetzt zur Richtung des Ölsumpfbereiches 9 (9a, 9b) einen im Wesentlichen abgeflachten Bereich 10e zur Anordnung mindestens eines Ölbehälters 13 aufweist.

Die Fig. 3a und 3b zeigen einen am abgeflachten Bereich 10e des Lagerschildes angeordneten Ölbehälter 13. Weiterhin zeigt insbesondere die Fig. 3a und 3b, aber auch die Fig. 4a, dass der Lagerschild 10 zur Schmierung des in der Lageraufnahme 10a angeordneten Lagers 11 ein zumindest teilweise rampenförmig ausgebildeten Öl-Zulaufbereich 10f aufweist, der mit Öl aus dem angeordneten Ölbehälter 13 strömungstechnisch versorgbar ist, was insbesondere auch durch die entsprechend dargestellten Pfeile angedeutet sein soll. Damit ist gewährleistet, dass ein in der Lageraufnahme 10a angeordnetes Lager 11 auch mit Öl entsprechend versorgt und geschmiert und/oder gekühlt werden kann.

Bei der hier dargestellten bevorzugten Ausführungsform ist nun eine Strömungsverbindung zwischen den beiden Ölsumpfbereichen 9a und 9b realisiert. Zur Realisierung dieser Strömungsverbindung kann der Lagerschild 10 eine Durchtrittsöffnung aufweisen, was hier aber weder ausgeführt noch dargestellt ist. Bei der bevorzugten Ausführungsform ist zwischen dem äußersten Umfangsrand des Umfangsbereiches 10b und mindestens einem Gehäuseteil, hier insbesondere zwischen den beiden Gehäuseteilen 12a und 12b ein Ringspalt 14 vorgesehen und/oder ausgebildet. Hierdurch bedingt kann Öl insbesondere vom zweiten Ölsumpfbereich 9b in den ersten Ölsumpfbereich 9a in beruhigter, insbesondere laminarer Strömung fließen, insbesondere aber ist hierdurch auch das Ölniveau in beiden Ölsumpfbereichen 9a und 9b dann gleich hoch ausgebildet.

Wie insbesondere die Fig. 1 und 2 deutlich machen, weist das Getriebe 4 mindestens zwei Zahnradstufen auf, wobei die erste Zahnradstufe aus dem ersten Ritzel 4a und dem Zahnrad 4b und die zweite Zahnradstufe aus dem zweiten Ritzel 4c und dem Achsantriebszahnrad 5a gebildet ist. Die Radantriebswelle 6 erstreckt sich zumindest teilweise durch eine Durchgangsöffnung 10g des Lagerschildes 10.

Schließlich zeigt die Fig. 7 das mit Hilfe des Lagerschildes 10 und des Achsantriebszahnrades 5a eine gezielte Ölführung zum Ölbehälter 13 realisierbar ist, was hier durch die entsprechend dargestellte Pfeile dargestellt sein soll. Insbesondere wird aufgrund der Drehung des Achsantriebszahnrades 5a und der nahen bzw. räumlichen benachbarten Anordnung des Achsantriebszahnrades 5a relativ zum Lagerschild 10 entsprechendes Öl in Richtung des Ölbehälters 13 gefördert beziehungsweise in den Ölbehälter 13 verbracht.

Wie die Fig. 1 bis 7 in der Gesamtschau deutlich machen, ist mit Hilfe des Lagerschildes 10, der an dem ersten Gehäuseteil 12a mit entsprechenden hier nicht näher bezeichneten Befestigungsschrauben fest anordenbar ist, dann das Differential 5 beziehungsweise das Achsantriebszahnrad 5a lagerbar, insbesondere indem ein Lager 11 in der Lageraufnahme 10a des Lagerschildes 10 angeordnet wird und mit Hilfe dieses Lagers 11 dann ein nicht näher bezeichneter Absatz des Gehäuses des Differentials beziehungsweise des Achsantriebszahnrades 5a einseitig lagerbar ist. Ein weiteres zweites Gehäuseteil 12b umgrenzt beziehungsweise umschließt dann das Differential 5 sowie das Getriebe 4 entsprechend, wobei das Differential 5 mit Hilfe eines weiteren Lagers 15 gelagert ist, wie insbesondere aus Fig. 1 und 2 ersichtlich.

Durch die Ausbildung des Antriebsstranges 1, insbesondere des entsprechend spezifisch angeordneten und/oder ausgebildeten Lagerschildes 10 werden die eingangs genannten Nachteile vermieden und entsprechende Vorteile erzielt.

### Bezugszeichenliste

- 1: Antriebsstrang
- 2: Antriebsmotor, insbesondere Elektromaschine
- 2a: Elektromotor
- 3: Antriebswelle
- 4: Getriebe
- 4a: erstes Ritzel
- 4b: Zahnrad
- 4c: zweites Ritzel
- 5: Differential
- 5a: Achsantriebszahnrad
- 6: erste Radantriebswelle
- 7: zweite Radantriebswelle
- 8: Zwischenwelle
- 9: Ölsumpfbereich
- 9a: erster Ölsumpfbereich
- 9b: zweiter Ölsumpfbereich
- 10: Lagerschild
- 10a: Lageraufnahme
- 10b: flanschartiger Umfangsbereich
- 10c: Abstützwandung
- 10d: kragenförmige Wandung
- 10e: abgeflachter Bereich
- 10f: rampenförmiger Öl-Zulaufbereich
- 10g: Durchgangsöffnung
- 11: Lager
- 12: Gehäuse (Gehäuseteil 12a, Gehäuseteil 12b)
- 13: Ölbehälter
- 14: Ringspalt
- 15: Lager

## Patentansprüche

1. Antriebsstrang (1) für ein Fahrzeug, insbesondere für ein Kraftfahrzeug, mit mindestens einer Antriebswelle (3), mit mindestens einem Getriebe (4), mit mindestens einem Differential (5) und mit mindestens einer Radantriebswelle (6, 7), wobei das Differential (5) mindestens ein Achsantriebszahnrad (5a) aufweist und das Achsantriebszahnrad (5a) mit mindestens einem Zahnrad (4c) des Getriebes (4) in Eingriff steht, wobei mindestens ein Ölsumpfbereich (9) vorhanden ist und wobei das Achsantriebszahnrad (5a) und/oder ein Zahnrad des Getriebes zumindest teilweise im Ölsumpfbereich (9) planschend angeordnet ist, wobei zur Lagerung des Differentials (5) mindestens ein Lagerschild (10) vorhanden ist und wobei der Lagerschild (10) mindestens eine Lageraufnahme (10a) zur Aufnahme eines Lagers (11) aufweist, wobei der Lagerschild (10) mindestens einen sich radial in Richtung des Ölsumpfbereiches (9) erstreckenden flanschartigen Umfangsbereich (10b) aufweist, wobei der Lagerschild (10) und/oder der Umfangsbereich (10b) derart ausgebildet ist bzw. sind, so dass der Ölsumpfbereich (9) hierdurch in einen ersten und in einen zweiten Ölsumpfbereich (9a, 9b) geteilt ist, wobei mit Hilfe des Lagerschildes (10) ein Strom des Öls aus dem zweiten Ölsumpfbereich (9b) in den ersten Ölsumpfbereich (9a) zumindest teilweise verhindert ist, und wobei zur Realisierung einer Strömungsverbindung zwischen dem ersten und dem zweiten Ölsumpfbereich (9a, 9b) der Lagerschild (10) mindestens eine Durchtrittsöffnung aufweist oder zwischen dem äußersten Umfangsrand des Umfangsbereiches (10b) und einem Gehäuse (12) oder mehreren Gehäuseteilen (12a, 12b) ein Ringspalt (14) ausgebildet ist, wobei mit Hilfe des Lagerschildes (10) der Zustrom von Öl aus dem zweiten Ölsumpfbereich (9b) in den ersten Ölsumpfbereich (9a) - oder umgekehrt - zumindest teilweise regulierbar ist und eine gezielte und/oder geführte Ölsammlung ermöglicht ist, **dadurch gekennzeichnet, dass** der Lagerschild (10) radial entgegengesetzt zur Richtung des Ölsumpfbereiches (9) einen abgeflachten Bereich (10e) zur Anordnung mindestens eines Ölbehälters (13) aufweist, wobei der Lagerschild (10) zur Schmierung des in der Lageraufnahme (10a) angeordneten Lagers (11) einen zumindest teilweise rampenförmig ausgebildeten Öl-Zulaufbereich (10f) aufweist, der mit Öl aus einem angeordneten Ölbehälter (13) strömungstechnisch verbindbar und/oder versorgbar ist.

2. Antriebsstrang nach Anspruch 1, **dadurch gekennzeichnet, dass** der erste Ölsumpfbereich (9a) volumenmäßig geringer ausgebildet ist als der zweite Ölsumpfbereich (9b) und dass das Achsantriebszahnrad (5a) im ersten Ölsumpfbereich (9a) planschend angeordnet ist.

3. Antriebsstrang nach einem der Ansprüche 1 bis 2, **dadurch gekennzeichnet, dass** die Lageraufnahme (10a) des Lagerschildes (10) eine Abstützwandung (10c) zur axialen Abstützung des in der Lageraufnahme (10a) angeordneten Lagers (11) aufweist und/oder dass der Umfangsbereich (10b) des Lagerschildes (10) und die Abstützwandung (10c) in einer Ebene liegen.

4. Antriebsstrang nach Anspruch 3, **dadurch gekennzeichnet, dass** die Lageraufnahme (10a) durch eine senkrecht zur Ebene der Abstützwandung (10c) und/oder des Umfangsbereiches (10b) ringförmig verlaufende kragenförmige Wandung (10d) zumindest teilweise begrenzt ist.

5. Antriebsstrang nach einem der Ansprüche 1 bis 4, **dadurch gekennzeichnet, dass** das Getriebe (4) mindestens zwei Zahnradstufen aufweist und/oder dass die Radantriebswelle (6, 7) sich zumindest teilweise durch eine Durchgangsöffnung (10g) des Lagerschildes (10) erstreckt.

6. Antriebsstrang nach einem der Ansprüche 1 bis 5, **dadurch gekennzeichnet, dass** mit Hilfe des Lagerschildes (10) und des Achsantriebzahnrades (5a) eine gezielte Ölzuführung zum Ölbehälter (13) realisierbar ist.

## Claims

1. Drivetrain (1) for a vehicle, in particular for a motor vehicle, comprising at least one drive shaft (3), at least one transmission (4), at least one differential (5) and at least one wheel drive shaft (6, 7), wherein the differential (5) has at least one axle drive gear (5a) and the axle drive gear (5a) is in engagement with at least one gear (4c) of the transmission (4), wherein at least one oil sump region (9) is provided and wherein the axle drive gear (5a) and/or a gear of the transmission is at least partially arranged in the oil sump region (9) in a splashing manner, wherein at least one bearing plate (10) is provided for mounting the differential (5) and wherein the bearing plate (10) has at least one bearing seat (10a) for receiving a bearing (11), wherein the bearing plate (10) has at least one flange-like circumferential region (10b) extending radially in the direction of the oil sump region (9), wherein the bearing plate (10) and/or the circumferential region (10b) is/are designed such that the oil sump region (9) is divided into a first and a second oil sump region (9a, 9b) thereby, wherein, by means of the bearing plate (10), a flow of oil from the second oil sump region (9b) into the first oil sump region (9a) is at least partially prevented, and wherein, in order to achieve a flow connection between the first and the second oil sump region (9a, 9b), the bearing plate (10) has at least one opening, or an annular gap (14) is formed between the outermost circumferential edge of the circumferential region (10b) and a housing (12) or a plurality of housing parts (12a, 12b), wherein, by means of the bearing plate (10), the inflow of oil from the second oil sump region (9b) into the first oil sump region (9a), or vice versa, can be at least partially controlled and a targeted and/or guided oil collection is made possible, **characterized in that** the bearing plate (10) has a flat region (10e) radially opposite to the direction of the oil sump region (9), for arrangement of at least one oil reservoir (13), wherein the bearing plate (10) has an at least partially ramp-like oil inlet region (10f) for lubricating the bearing (11) arranged in the bearing seat (10a), which inlet region can be fluidically connected and/or supplied with oil from an arranged oil reservoir (13).

2. Drivetrain according to claim 1, **characterized in that** the first oil sump region (9a) is smaller in volume than the second oil sump region (9b), **and in that** the axle drive gear (5a) is arranged in the first oil sump region (9a) in a splashing manner.

3. Drivetrain according to either of claims 1 or 2, **characterized in that** the bearing seat (10a) of the bearing plate (10) has a support wall (10c) for axial support of the bearing (11) arranged in the bearing seat (10a), **and/or in that** the support wall (10c) and the circumferential region (10b) of the bearing plate (10) lie in a plane.

4. Drivetrain according to claim 3, **characterized in that** the bearing seat (10a) is at least partially delimited by a collar-like wall (10d) extending annularly perpendicular to the plane of the support wall (10c) and/or the circumferential region (10b).

5. Drivetrain according to any of claims 1 to 4, **characterized in that** the transmission (4) has at least two gear stages, **and/or in that** the wheel drive shaft (6, 7) extends at least partially through an opening (10g) of the bearing plate (10).

6. Drivetrain according to any of claims 1 to 5, **characterized in that,** by means of the bearing plate (10) and the axle drive gear (5a), a targeted oil supply to the oil reservoir (13) can be achieved.

## Revendications

1. Chaîne cinématique (1) pour un véhicule, en particulier pour un véhicule automobile, comportant au moins un arbre d'entraînement (3), comportant au moins une transmission (4), comportant au moins un différentiel (5) et comportant au moins un arbre d'entraînement de roue (6, 7), dans laquelle le différentiel (5) présente au moins une roue dentée d'entraînement d'essieu (5a) et la roue dentée d'entraînement d'essieu (5a) est en prise avec au moins une roue dentée (4c) de la transmission (4), dans laquelle au moins une zone de carter à huile (9) est présente et dans laquelle la roue dentée d'entraînement d'essieu (5a) et/ou une roue dentée de la transmission sont disposées de manière à barboter au moins partiellement dans la zone de carter à huile (9), dans laquelle au moins un flasque (10) est présent pour le montage du différentiel (5) et dans laquelle le flasque (10) présente au moins un logement pour palier (10a) pour la réception d'un palier (11), dans laquelle le flasque (10) présente au moins une zone circonférentielle (10b) en forme de bride s'étendant radialement en direction de la zone de carter à huile (9), dans laquelle le flasque (10) et/ou la zone circonférentielle (10b) sont réalisés de telle sorte que la zone de carter à huile (9) est ainsi divisée en une première et une seconde zone de carter à huile (9a, 9b), dans laquelle un écoulement de l'huile de la seconde zone de carter à huile (9b) à la première zone de carter à huile (9a) est au moins partiellement empêché à l'aide du flasque (10), et dans laquelle, pour la réalisation d'un raccordement d'écoulement entre la première et la seconde zone de carter à huile (9a, 9b), le flasque (10) présente au moins une ouverture de passage ou un interstice annulaire (14) est réalisé entre le bord circonférentiel le plus extérieur de la zone circonférentielle (10b) et un boîtier (12) ou plusieurs parties formant boîtier (12a, 12b), dans laquelle l'afflux d'huile de la seconde zone de carter à huile (9b) à la première zone de carter à huile (9a), ou inversement, peut être au moins partiellement régulé et une collecte d'huile ciblée et/ou guidée est permise à l'aide du flasque (10), **caractérisée en ce que** le flasque (10) présente une zone aplatie (10e) opposée radialement à la direction de la zone de carter à huile (9) pour la disposition d'au moins un réservoir à huile (13), dans laquelle le flasque (10) présente, pour la lubrification du palier (11) disposé dans le logement pour palier (10a), une zone d'afflux d'huile (10f) réalisée au moins partiellement sous forme de rampe, laquelle peut être raccordée et/ou alimentée par raccordement fluidique en huile à partir d'un réservoir à huile (13) disposé.

2. Chaîne cinématique selon la revendication 1, **caractérisée en ce que** la première zone de carter à huile (9a) est réalisée avec un volume inférieur à celui de la seconde zone de carter à huile (9b) et **en ce que** la roue dentée d'entraînement d'essieu (5a) est disposée de manière à barboter dans la première zone de carter à huile (9a).

3. Chaîne cinématique selon l'une des revendications 1 à 2,
**caractérisée en ce que** le logement pour palier (10a) du flasque (10) présente une paroi d'appui (10c) pour l'appui axial du palier (11) disposé dans le logement pour palier (10a) **et/ou en ce que** la zone circonférentielle (10b) du flasque (10) et la paroi d'appui (10c) se trouvent dans un plan.

4. Chaîne cinématique selon la revendication 3, **caractérisée en ce que** le logement pour palier (10a) est au moins partiellement délimité par une paroi en forme de collerette (10d) s'étendant en forme d'anneau perpendiculairement au plan de la paroi d'appui (10c) et/ou de la zone circonférentielle (10b).

5. Chaîne cinématique selon l'une des revendications 1 à 4,
**caractérisée en ce que** la transmission (4) présente au moins deux étages de roues dentées **et/ou en ce que** l'arbre d'entraînement de roue (6, 7) s'étend au moins partiellement à travers une ouverture de passage (10g) du flasque (10).

6. Chaîne cinématique selon l'une des revendications 1 à 5,
**caractérisée en ce qu'**une amenée d'huile ciblée vers le réservoir à huile (13) peut être réalisée à l'aide du flasque (10) et de la roue dentée d'entraînement d'essieu (5a).
